# EUROPEAN PATENT APPLICATION

(11) **EP 4 170 198 A1**
(43) Date of publication of application: **26.04.2023**
(21) Application number: 21828781.1
(22) Date of filing: 19.03.2021
(51) Int. Cl.: F16F 15/08, B62D 24/02

(54) **CAB MOUNT**

(30) Priority: 22.06.2020 JP 2020107252
(71) Applicant: Prospira Corporation, Kanagawa prefecture 212-0013 (JP)
(72) Inventor: SATO Shunji, Tokyo 104-8340 (JP)
(74) Representative: Marks & Clerk LLP
(86) International application number: PCT/JP2021/011518
(87) International publication number: WO 2021/261037

(57) **Abstract**

A cab mount (1A) includes an upper mount elastic body (2) and a lower mount elastic body (3) that are configured to sandwich a frame (10) of a vehicle. The upper mount elastic body (2) has recesses (4) in an inner peripheral surface (f21) of the upper mount elastic body (2). The recesses (4) extend in a circumferential direction. Each of the recesses (4) has an upper contact surface (f1) and a lower contact surface (f2) that are in contact with each other in a steady state.

## Description

### TECHNICAL FIELD

The present disclosure relates to a cab mount.

### BACKGROUND

Some of conventional cab mounts are of a type that sandwiches a frame of a vehicle between an upper mount elastic body and a lower mount elastic body, for the purpose of maintaining a correct relative position between the frame and a cabin (cab) of the vehicle and isolating vibration from being transmitted to the cabin via the frame (refer to Patent Literature (PTL) 1, for example).

### CITATION LIST

### Patent Literature

PTL 1: JP 2004-291795 A

### SUMMARY

### (Technical Problem)

However, in the above conventional cab mounts, N/V performance ("Noise/Vibration Performance") deteriorates as damping performance is improved. Therefore, there is room for improvement in terms of achieving both improved damping performance and improved N/V performance in the conventional cab mounts described above.

It would be helpful to provide a cab mount that achieves both improved damping performance and improved N/V performance.

### (Solution to Problem)

A cab mount according to the present disclosure includes an upper mount elastic body and a lower mount elastic body that are configured to sandwich a frame of a vehicle. The cab mount includes at least one recess in an inner peripheral surface of the upper mount elastic body. The recess extends in a circumferential direction. The recess has an upper contact surface and a lower contact surface that are in contact with each other in a steady state. According to the cab mount of the present disclosure, both improved damping performance and improved N/V performance can be achieved.

In the cab mount according to the present disclosure, the recess is preferably annular. In this case, the damping performance and the N/V performance can be further improved.

In the cab mount according to the present disclosure, the at least one recess is preferably a plurality of recesses arranged in a vertical direction. In this case, the damping performance and the N/V performance can be further improved.

In the cab mount according to the present disclosure, bumps and dips can be formed in at least any one of the upper contact surface or the lower contact surface. In this case, the damping performance can be further improved.

### (Advantageous Effect)

According to the present disclosure, it is possible to provide the cab mount that achieves both the improved damping performance and the improved N/V performance.

### BRIEF DESCRIPTION OF THE DRAWINGS

In the accompanying drawings:
FIG. 1A is a cross sectional view of a cab mount according to a first embodiment, schematically illustrating the cab mount in a no-load state in cross section in an axial direction;
FIG. 1B is a cross sectional view of the cab mount of FIG. 1A, schematically illustrating the cab mount in a steady state;
FIG. 2A is a cross sectional view of a cab mount according to a second embodiment, schematically illustrating, in cross section in the axial direction, the cab mount in the no-load state immediately before assembly to the frame and the cab connecting member is completed;
FIG. 2B is a cross sectional view of the cab mount of FIG. 2A, schematically illustrating the cab mount in the steady state after assembly to the frame and the cab connecting member is completed;
FIG. 3 is a cross sectional view of a cab mount according to a third embodiment, schematically illustrating, in cross section in the axial direction, the cab mount in the no-load state immediately before assembly to the frame and the cab connecting member is completed;
FIG. 4A is a cross sectional view of a conventional cab mount, schematically illustrating, in cross section in the axial direction, the cab mount in the no-load state immediately before assembly to the frame and the cab connecting member is completed; and
FIG. 4B is a cross sectional view of the cab mount of FIG. 1A, schematically illustrating the cab mount in the steady state after assembly to the frame and the cab connecting member is completed.

### DETAILED DESCRIPTION

Cab mounts according to various embodiments of the present disclosure will be described below with reference to the drawings.

Here, an axial direction refers to a direction in which a central axis O (hereinafter also referred to as "axis O") of a cab mount 1 extends. In the embodiments, the axis O extends in parallel to a vertical direction. In the embodiments, an upper side in the axial direction refers to an upper side in the vertical direction (also simply referred to as "upper side"). Furthermore, in the embodiments, a lower side in the axial direction refers to a lower side in the vertical direction (also simply referred to as "lower side").

In the following description, an axial perpendicular direction refers to a direction perpendicular to the axial direction and includes the meaning of a radial direction. In the embodiments, an outside in the axial perpendicular direction refers to a side far from the axis O (also referred to as "outside in the radial direction"). Furthermore, in the embodiments, an inside in the axial perpendicular direction refers to a side close to the axis O (also referred to as "inside in the radial direction").

In the following description, a circumferential direction refers to a direction along the circumference of the axis in axial view.

The cab mount 1 includes an upper mount elastic body 2 and a lower mount elastic body 3 that sandwich a frame 10 of a vehicle. The upper mount elastic body 2 has at least one recess 4 in an inner peripheral surface f21 of the upper mount elastic body 2. The recess 4 extends in a circumferential direction. The recess 4 has an upper contact surface f1 and a lower contact surface f2, which are in contact with each other in a steady state.

The cab mount 1 is mounted on the vehicle such as a pickup truck or an SUV, for example. The cab mount 1 connects a cab connecting member 11 of the vehicle to a frame (chassis) 10 of the vehicle. The cab connecting member 11 is a member that composes a cab (not illustrated). In the following description of each of the embodiments, substantially identical components are indicated with the same reference numerals and a description thereof is omitted as appropriate.

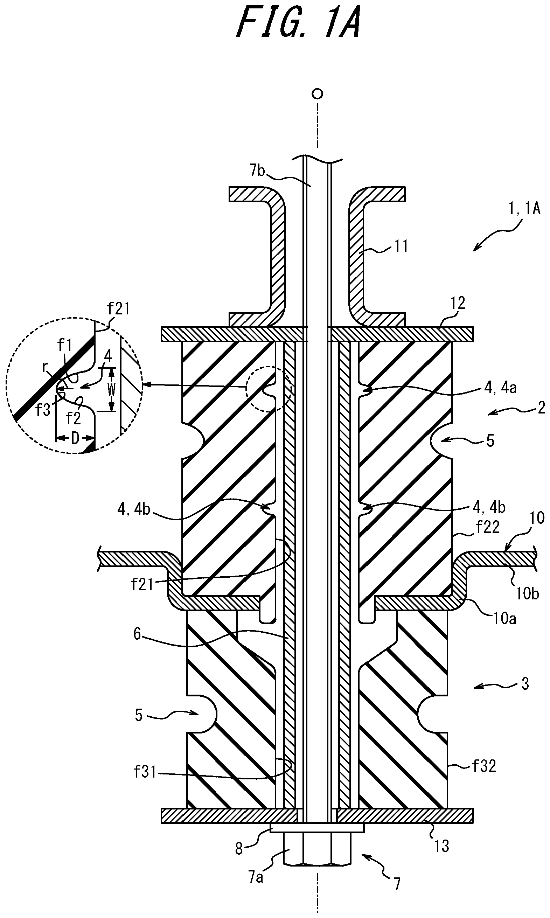

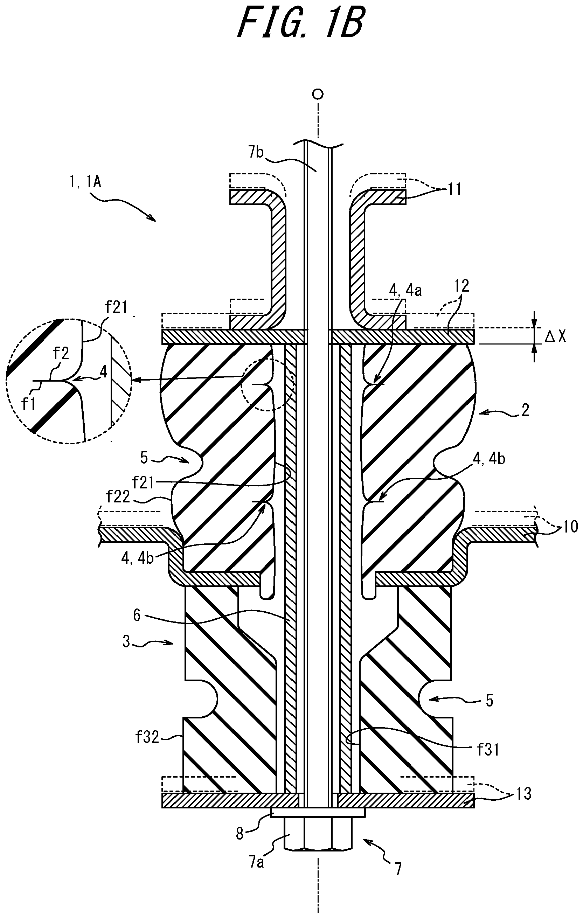

In FIG. 1A, a reference numeral 1A indicates a cab mount. FIG. 1A schematically illustrates, in cross section in the axial direction, the cab mount 1A in a no-load state immediately before assembly to the frame 10 and the cab connecting member 11 is completed. Here, the "no-load state" refers to a state immediately before assembly of a cab mount to a frame and a cab (cab connecting member) is completed, and a state in which the cab mount is not under a load from the frame and the cab. In other words, the "no-load state" refers to a state in which an upper mount elastic body is not under a load. FIG. 1B schematically illustrates the cab mount 1A in a steady state in which assembly to the frame 10 and the cab connecting member 11 is completed. Here, the "steady state" refers to a state in which assembly of a cab mount to a frame and a cab (cab connecting member) is completed, and a state in which the cab mount is under a self-weight of the cab without receiving any load from the frame. In other words, the "steady state" means a state in which an upper mount elastic body is only under the self-weight of the cab. In addition, the cross section in the axial direction is cross section including the axis O.

Referring to FIG. 1A, an upper mount elastic body 2 is disposed on an upper side with respect to the frame 10. In the present embodiment, the upper mount elastic body 2 is formed of NR (natural rubber). In the present embodiment, the cab connecting member 11 is disposed on an upper side with respect to the upper mount elastic body 2. In the present embodiment, the cab member 11 is attached to the upper mount elastic body 2 via an upper plate 12. The upper mount elastic body 2 is not limited to rubber. For example, the upper mount elastic body 2 can be made of a rubber elastic material (for example, elastomer).

A lower mount elastic body 3 is disposed on a lower side with respect to the frame 10. In the present embodiment, the lower mount elastic body 3 is formed of NR. In the present embodiment, a lower plate 13 is attached to a lower side with respect to the lower mount elastic body 3. The lower mount elastic body 3 is not limited to rubber. For example, the lower mount elastic body 3 can also be formed of a rubber elastic material (for example, elastomer).

In the present embodiment, a lower part of the upper mount elastic body 2 is disposed on an inner surface of a concavity portion 10a of the frame 10. In the present embodiment, the lower mount elastic body 3 is disposed on a bottom surface of the concavity portion 10a of the frame 10. Furthermore, in the present embodiment, a flat portion 10b that surrounds the concavity portion 10a around the axial direction is formed in the frame 10.

The cab mount 1A also has a shaft member 6 that penetrates through the frame 10 and extends through the upper mount elastic body 2 and the lower mount elastic body 3. In the present embodiment, the shaft member 6 is a hollow shaft member (cylindrical member). In the present embodiment, the central axis of the shaft member 6 coincides with the central axis O of the cab mount 1A.

In the present embodiment, the shaft member 6 has a bolt 7. A head 7a of the bolt 7 is positioned on a lower side with respect to the lower plate 13. A shaft 7b of the bolt 7 penetrates through the lower plate 13, the upper plate 12, and the cab member 11. The upper mount elastic body 2 and the lower mount elastic body 3 are brought axially closer to each other by raising of the head 7a as the bolt 7 is screwed in. Thereby, the upper mount elastic body 2 and the lower mount elastic body 3 are each attached to the frame 10 in a precompressed state.

In the present embodiment, a washer 8 is interposed between the head 7a of bolt 7 and the lower plate 13. A method of assembling the upper mount elastic body 2 and the lower mount elastic body 3 to the frame 10 is not limited to the method described above.

At least one recess 4 is formed in an inner peripheral surface f21 of the upper mount elastic body 2. In the present embodiment, the recess 4 is an annular recess extending in the circumferential direction. In the present embodiment, the recess 4 extends in the circumferential direction through the entire circumference around the axis O. In other words, in the present embodiment, the recess 4 is annular.

In the present embodiment, each of an upper contact surface f1 and a lower contact surface f2 of the recess 4 is formed of a flat surface. In the present embodiment, the upper contact surface f1 and the lower contact surface f2 are connected by a curved surface f3 with a radius of curvature r, in cross sectional view in the axial direction. Thereby, in the present embodiment, the recess 4 has a mountainous shape (V-shape) with a rounded top in cross sectional view in the axial direction, as illustrated in an enlarged view of FIG. 1A.

However, according to the present invention, the upper contact surface f1 and the lower contact surface f2 can linearly intersect each other in cross sectional view in the axial direction. In this case, the recess 4 can be in a mountainous shape (V-shape) with a top of an acute angle in cross sectional view in the axial direction. According to the present disclosure, the upper contact surface f1 and the lower contact surface f2 can be made not to intersect each other in cross sectional view in the axial direction. In this case, the recess 4 can be a rectangular-shaped (U-shaped) recess in cross sectional view in the axial direction. Furthermore, according to the present invention, the upper contact surface f1 and the lower contact surface f2 can be in a rounded shape formed with a radius of curvature r, in cross sectional view in the axial direction. In this case, the upper contact surface f1 and the lower contact surface f2 are curved surfaces.

The upper contact surface f1 and the lower contact surface f2 can be in contact with each other during input of vibration in a vertical direction. As illustrated in FIG. 1B, the upper contact surface f1 and the lower contact surface f2 are in contact with each other in the steady state. The steady state includes, for example, a state in which the vehicle is stopping, a state in which the vehicle is traveling on a smooth road surface, a state in which the vehicle is turning, and a state in which the vehicle is accelerating or decelerating. Referring to FIG. 1B, when vehicle vibration is input to the upper mount elastic body 2, a frictional force can be generated between the upper contact surface f1 and the lower contact surface f2 in the cab mount 1.

Referring to FIG. 1A, the width W and depth D of the recess 4 can be set as appropriate according to performance and the like required of the vehicle to which the cab mount 1A is assembled.

The width W of the recess 4 is a distance, in the vertical direction, of a portion at which the upper contact surface f1 and the lower contact surface f2 contact at last, of a distance in the vertical direction between the upper contact surface f1 and the lower contact surface f2. In the present embodiment, as illustrated in FIG. 1A, the width W of the recess 4 is a distance in the vertical direction between the upper contact surface f1 and the lower contact surface f2, in the inner peripheral surface f21 of the upper mount elastic body 2. The depth D of the recess 4 is a depth of the recess 4 in the axial perpendicular direction.

A plurality of recesses 4 are arranged in the vertical direction. In the present embodiment, the upper mount elastic body 2 has two recesses 4, i.e., one upper recess 4a and one lower recess 4b. In the present embodiment, the upper recess 4a is disposed, in the vertical direction, at an upper position than a hollow portion 5 formed in an outer peripheral surface f22 of the upper mount elastic body 2. In the present embodiment, the lower recess 4a is disposed, in the vertical direction, at a lower position than the hollow portion 5 of the upper mount elastic body 2. However, according to the present invention, either the upper recess 4a or the lower recess 4b can be positioned at the same position as the hollow portion 5 in the vertical direction.

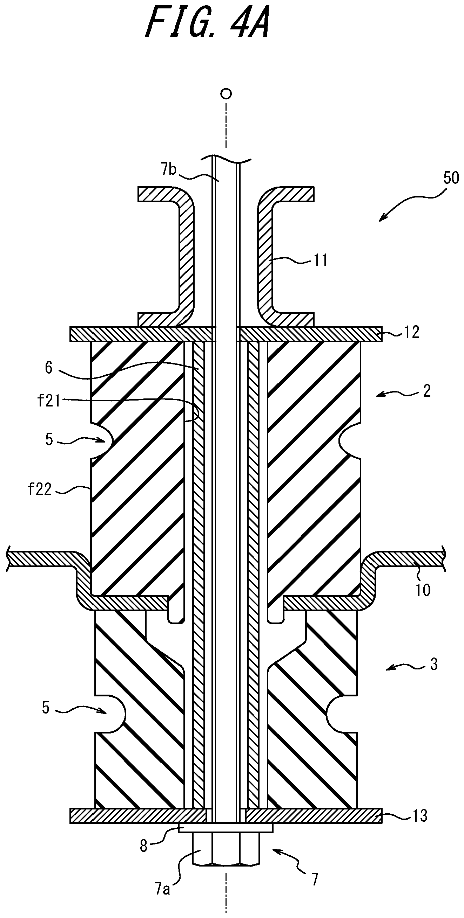

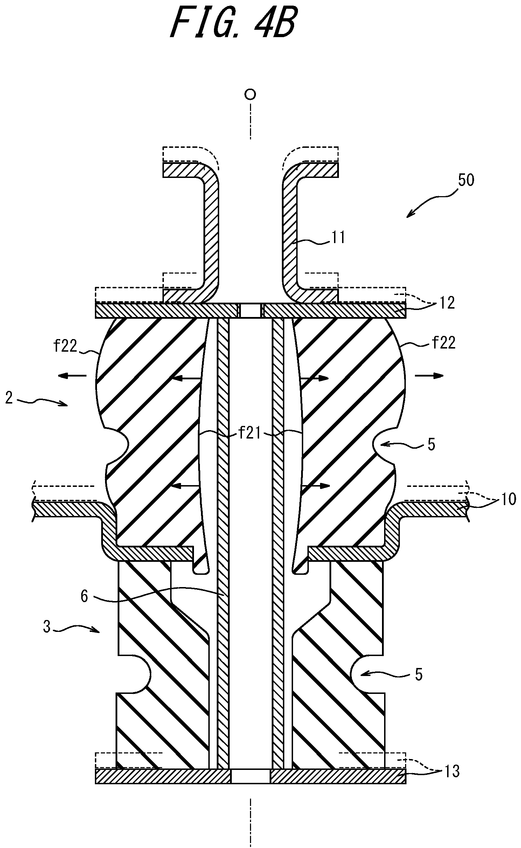

Here, FIG. 4A is a cross sectional view of a conventional cab mount 50, schematically illustrating, in cross section in the axial direction, the cab mount 50 in the no-load state immediately before assembly to the frame 10 and the cab connecting member 11 is completed. FIG. 4B schematically illustrates the cab mount 50 in the steady state after assembly to the frame 10 and the cab connecting member 11 is completed.

Referring to FIG. 4B, when the cab mount 50 is in the steady state, an upper mount elastic body 2 is in a compressed state. At this time, an inner surface f21 of the upper mount elastic body 2 swells outward in the radial direction, and at the same time, an outer surface f22 of the upper mount elastic body 2 also swells outward in the radial direction.

NR compound rubber with a low dynamic-to-static modulus ratio is used as an elastic material for common cab mounts. This is because NR is considered to be better, including cost-effectiveness, when durability is considered.

When N/V performance is considered, a dynamic spring constant Kd is preferably lowed in the elastic body. This is because the dynamic spring constant Kd contributes to deterioration of the N/V performance in the vibration region.

Conventional measures to improve vehicle ride comfort (to improve damping performance) include, for example, changing a rubber composition of the elastic body. As the measures of changing the rubber composition, for example, there is a method in which SBR (styrene butadiene rubber) or IIR (isobutylene isoprene rubber) is compounded with NR. However, when a composition of a material other than NR is increased, the dynamic-to-static modulus ratio of the rubber itself deteriorates, and the dynamic spring constant Kd, which should be kept low for the purpose of improving N/V performance, also increases. Therefore, when the composition of another material is increased, the N/V performance deteriorates, and the durability of the rubber itself also deteriorates.

Another conventional measure is to change the cab mount to a liquid-sealed mount. However, as in other conventional measures, parts cost significantly increases when the cab mount is changed to the liquid-sealed mount.

Therefore, the various conventional cab mounts described above have room for improvement in terms of achieving both improved damping performance and improved N/V performance.

Therefore, in the cab mount 1, the recesses 4 are formed in the inner peripheral surface f21 of the upper mount elastic body 2, without changing the material of the upper mount elastic body 2.

Next, effects of the cab mount 1A will be described with reference to the cab mount 1A.

Referring to FIG. 1A, in the no-load state, the recesses 4 each form a gap between the upper contact surface f1 and the lower contact surface f2, without collapsing.

In contrast, referring to FIG. 1B, in the steady state of the cab mount 1A in which the cab mount 1A is assembled to the vehicle, the lower mount elastic body 3 is compressed in the axial direction. At this time, due to collapse of the recesses 4 in the axial direction, the upper contact surface f1 and the lower contact surface f2 of each recess 4 can be brought into contact with each other. In the present embodiment, the upper contact surface f1 and the lower contact surface f2 of the recess 4 are in contact with each other in the steady state. Thereby, the upper contact surface f1 and the lower contact surface f2 of the recess 4 are friction surfaces, as upper and lower mating surfaces, in the steady state. Therefore, when vehicle vibration is input to the cab mount 1A, a frictional force can be generated between the upper contact surface f1 and the lower contact surface f2 of the recess 4. According to the cab mount 1A, it is possible to improve the damping performance.

Since the elastic bodies, such as the upper mount elastic body 2, are made of a single material (for example, only NR), the static spring constant Ks of the cab mount 1A does not change. This allows the dynamic spring constant Kd to increase while the static spring constant Ks remains unchanged. Therefore, according to the cab mount 1A, the increase in the dynamic spring constant Kd can be kept lower than that when the rubber composition is changed. In this case, the dynamic-to-static modulus ratio of the cab mount 1A is lower than that when the composition of the elastic bodies is changed. Therefore, according to the cab mount 1A, the N/V performance can also be kept low.

Therefore, according to the cab mount 1A, it is possible to achieve both the improved damping performance and the improved N/V performance. As a result, according to the cab mount 1A, vehicle ride comfort can be improved.

By the way, in the case of improving the damping performance of the cab mount by changing the rubber composition of the elastic bodies, the durability of the elastic bodies deteriorates. In other words, when the rubber composition of the elastic bodies is changed, improvement in the damping performance and the durability of the elastic body are in opposition to each other. However, according to the cab mount 1A, since the elastic bodies are made of only the single material, the durability of the elastic body remains unchanged. Even when a material such as rubber with improved damping performance is used in the elastic bodies, the damping performance can be further increased.

In the cab mount 1A, each of the recesses 4 is annular. In this case, it is possible to achieve both the improved damping performance and the improved N/V performance over the entire circumference of the cab mount 1A. However, according to the present disclosure, each recess 4 can be an acyclic recess without extending to the entire circumference in the circumferential direction. In this case, the recess 4 may be formed at least at one position in the circumferential direction.

In the cab mount 1A, the plurality of recesses 4 are arranged in the vertical direction. In this case, the damping performance and the N/V performance can be further improved. However, according to the present disclosure, the recess 4 can be disposed at least at any one of the positions in the vertical direction.

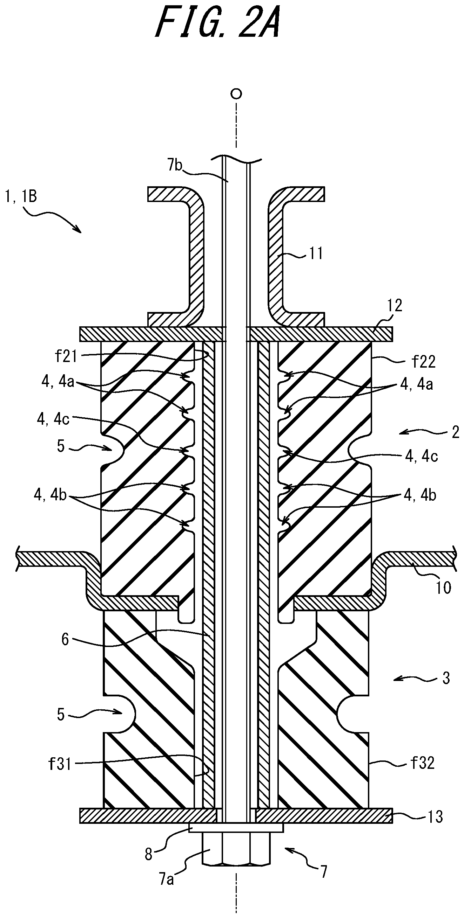

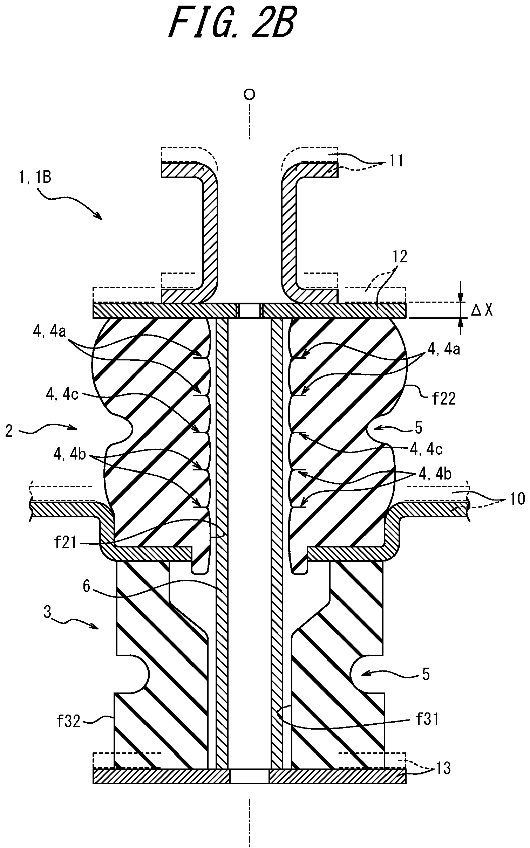

FIG. 2A is a cross sectional view of a cab mount 1B according to a second embodiment, schematically illustrating, in cross section in the axial direction, the cab mount 1B in the no-load state immediately before assembly to the frame 10 and the cab connecting member 11 is completed. FIG. 2B schematically illustrates the cab mount 1B in the steady state after assembly to the frame 10 and the cab connecting member 11 is completed.

A plurality of recesses 4 are arranged in the vertical direction, as with the cab mount 1A. In the present embodiment, an upper mount elastic body 2 includes five recesses 4, i.e., two upper recesses 4a, one intermediate recess 4c, and two lower recesses 4b. In the present embodiment, the one intermediate recess 4c is disposed at the same position as a hollow portion 5 of the upper mount elastic body 2 in the vertical direction. The hollow portion 5 of the upper mount elastic body 2 collapses relatively early when the upper mount elastic body 2 is in the compressed state. Therefore, in the present embodiment, by disposing the intermediate recess 4c at the same position as the hollow portion 5 of the upper mount elastic body 2, the recess 4 always collapses even under a lower load than in the steady state (for example, during a so-called vehicle rebound in which the upper mount elastic body 2 is stretched while the lower mount elastic body 3 is compressed), so it is possible to quickly respond to change in the dynamic spring constant Kd.

According to the present invention, there should be at least one intermediate recess 4c. According to the present invention, the number of the upper recesses 4a and the number of the lower recesses 4b can each be at least one. Furthermore, according to the present invention, there should be at least either of the upper recesses 4a or the lower recesses 4b.

In the cab mount 1, bumps and dips can be formed at least in any one of the upper contact surface f1 or the lower contact surface f2 of the recess 4. In this case, the damping performance can be further improved.

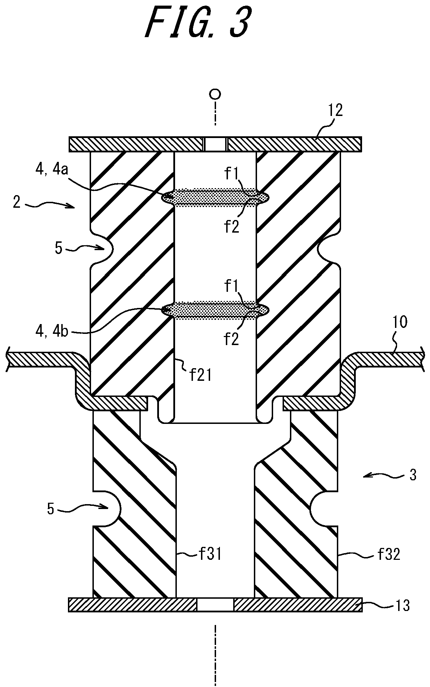

FIG. 3 is a cross sectional view of a cab mount 1C according to a third embodiment, schematically illustrating, in cross section in the axial direction, the no-load state of the cab mount 1C immediately before assembly to the frame 10 and the cab connecting member 11 is completed. In FIG. 3, a shaft member 6 and a bolt 7 are omitted.

Referring to FIG. 3, in the cab mount 1C, the surface roughness of recesses 4 is high. In the present embodiment, the entire surfaces of the recesses 4 are formed with a plurality of micro bumps and dips. The micro bumps and dips can be formed, for example, by shot blasting or other surface processing on the inside of a molding die for an upper mount elastic body 2 at portions forming the recesses 4. This can further improve a friction effect and further increase damping performance.

As described above, according to the cab mount 1 of each of the embodiments, the cab mount that achieves both the improved damping performance and the improved N/V performance can be provided.

According to the present disclosure, a recess 4 can be formed in an inner peripheral surface f31 of the lower mount elastic body 3. In each of the embodiments described above, the hollow portion 5 extending in the circumferential direction is formed on the outer peripheral surface f22 of the upper mount elastic body 2. The hollow portion 5 is concave inwardly in the radial direction from the outer peripheral surface f22 of the upper mount elastic body 2. In this case, the dynamic-to-static modulus ratio can be controlled to a desired value and a load deflection can be controlled to a constant value. In each of the above embodiments, the hollow portion 5 extends through the entire circumference in the circumferential direction. In each of the above embodiments, a hollow portion 5 is also formed on an outer peripheral surface f32 of the lower mount elastic body 3.

The foregoing describes exemplary embodiments, and various revisions can be made without departing from the scope of claims. In the present disclosure, the frame 10 includes a bracket attached to the frame 10. The various configurations employed in the present embodiments and the exemplary configurations described above can be replaced with each other or combined as appropriate.

### REFERENCE SIGNS LIST

- 1, 1A - 1C: cab mount
- 2: upper mount elastic body
- 3: lower mount elastic body
- 4, 4a - 4c: recess
- 5: hollow portion
- 6: shaft member
- 7: bolt
- 8: washer
- 10: frame
- 11: cab member
- 12: upper plate
- 13: lower plate
- f1: upper contact surface
- f2: lower contact surface
- f21: inner peripheral surface of upper mount elastic body
- f22: outer peripheral surface of upper mount elastic body
- f31: inner peripheral surface of lower mount elastic body
- f32: outer peripheral surface of lower mount elastic body

## Claims

1. A cab mount including an upper mount elastic body and a lower mount elastic body that are configured to sandwich a frame of a vehicle, the cab mount comprising:
at least one recess in an inner peripheral surface of the upper mount elastic body,
wherein
the recess extends in a circumferential direction, and
the recess has an upper contact surface and a lower contact surface that are in contact with each other in a steady state.

2. The cab mount according to claim 1, wherein the recess is annular.

3. The cab mount according to claim 1 or 2, wherein the at least one recess is a plurality of recesses arranged in a vertical direction.

4. The cab mount according to any one of claims 1 to 3, wherein bumps and dips are formed in at least any one of the upper contact surface or the lower contact surface.
